# EUROPEAN PATENT APPLICATION

(11) **EP 4 703 865 A1**
(43) Date of publication of application: **04.03.2026**
(21) Application number: 25198183.3
(22) Date of filing: 26.08.2025
(51) Int. Cl.: G06F 3/147, F21V 1/00

(54) **REMOTELY CONTROLLABLE DISPLAY PANEL FOR A LUMINAIRE**

(30) Priority: 28.08.2024 US 202463688042 P
(71) Applicant: ROBE lighting s.r.o., 75661 Roznov pod Radhostem (CZ)
(72) Inventor: Kopecková, Hana, 756 24 Bystricka (CZ); Vilém, Jan, 757 01 Valasské Mezirící (CZ); Vavrík, Jindrich, 756 54 Zubrí (CZ); Valchár, Josef, 756 56 Prostrední Becva (CZ); Vémola, Tomás, 757 01 Valasské Mezirící (CZ)
(74) Representative: Murgitroyd & Company

(57) **Abstract**

A luminaire includes an enclosure with a display panel mounted in an external surface of the enclosure, a head mechanically coupled to the enclosure, and a control system located in one or both of the head and the enclosure. The head is configured for rotation relative to the enclosure and to emit a light beam. The control system is configured to receive a display command via a data link and, in response, cause the display panel to display visual content specified in the display command, the visual content comprising pixel values for all pixels of the display panel.

## Description

### TECHNICAL FIELD OF THE DISCLOSURE

The disclosure generally relates to automated luminaires, and more specifically to a lighting effect system for use in an automated luminaire.

### BACKGROUND

Some luminaires in the entertainment and architectural lighting markets include automated and remotely controllable functions. Such luminaires may be used in theatres, television studios, concerts, theme parks, night clubs, and other venues. A luminaire may provide control over the pan and tilt functions of the luminaire allowing an operator to control a direction that the luminaire is pointing and thus a position of the luminaire's light beam on a stage or in a studio. Such position control may be obtained via control of the luminaire's position in two orthogonal rotational axes, which may be referred to as pan and tilt. Some luminaires provide control over other parameters such as intensity, color, focus, beam size, beam shape, and/or beam pattern. Where such luminaires are remotely controllable, they may be referred to as automated luminaires. The optical systems of such automated luminaires may be designed to enable a user to control the beam size, from a very narrow output beam to a wider, wash beam. Luminaires may also contain a display panel for user input of parameters.

### BRIEF DESCRIPTION OF THE DRAWINGS

For a more complete understanding of the present disclosure and the advantages thereof, reference is now made to the following description taken in conjunction with the accompanying drawings in which like reference numerals indicate like features and wherein:
FIG. 1 presents an isometric view of a first luminaire according to the disclosure;
FIG. 2 presents an isometric view of the first luminaire with covers removed and with the optical system in a first configuration;
FIG. 3 presents an isometric view of the first luminaire with covers removed and with the optical system in a second configuration;
FIG. 4 presents an exploded view of an optical system of the first luminaire;
FIG. 5 presents an exploded view of luminaire optical components of the first luminaire in the first configuration;
FIG. 6 presents an exploded view of the luminaire optical components of the first luminaire in the second configuration;
FIG. 7 presents the luminaire optical components of the first luminaire in the first configuration;
FIG. 8 presents the luminaire optical components of the first luminaire in the second configuration;
FIG. 9 presents four luminaires, each comprising a display system according to the disclosure;
FIG. 10 presents an elevation view of a light output side of a lens array of the optical system of the first luminaire;
FIG. 11 presents an elevation view of a light input side of the lens array of FIG. 10;
FIG. 12 presents an elevation view of a light output side of a second lens array according to the disclosure;
FIG. 13 presents an elevation view of a light input side of the second lens array; and
FIG. 14 presents an elevation view of a second luminaire according to the disclosure.

### SUMMARY

In an embodiment a luminaire includes an enclosure, comprising a display panel mounted in an external surface of the enclosure, a head mechanically coupled to the enclosure, and a control system located in one or both of the head and the enclosure. The head is configured for rotation relative to the enclosure and to emit a light beam. The control system is configured to receive a display command via a data link and, in response, cause the display panel to display visual content specified in the display command, the visual content comprising pixel values for all pixels of the display panel.

### DETAILED DESCRIPTION

Preferred embodiments are illustrated in the figures, like numerals being used to refer to like and corresponding parts of the various drawings.

Some luminaires (both automated and non-automated) comprise a light source including a light emitting diode (LED) array with zoom optics. Luminaires according to the disclosure comprise a light engine including LEDs or laser based light sources. A laser based light source may comprise a laser LED either used as a pump for a light emitting phosphor or passed through an optical decollimator. The light engine may include LED arrays of differing colors, e.g., red, blue, green, and white. An operator can adjust the beam to a desired color by remotely adjusting the relative brightness of the colors. Optical systems are also provided such that the operator can adjust an emitted beam angle from at least some of the light emitters of the light engine.

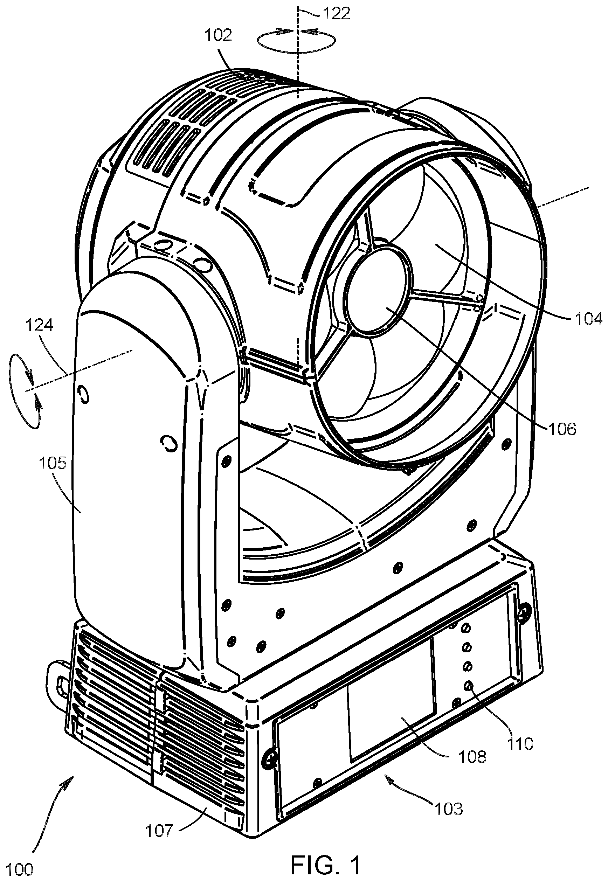

FIG. 1 presents an isometric view of a first luminaire 100 according to the disclosure in a first configuration. In some embodiments the luminaire 100 is an automated luminaire comprising a head 102 which is configured to rotate within a yoke 105 about a tilt axis 124. The yoke 105 is configured to rotate relative to a luminaire enclosure 107 about a pan axis 122. The pan axis 122 and the tilt axis 124 are orthogonal to each other. Both pan and tilt motions may be mechanically coupled to hand-operated manual controls or may be coupled for motion to motors, linear actuators, or other electromechanical mechanisms.

Such electromechanical mechanisms may be under the control of a control system 103 comprising a microcontroller or other programmable processing system that is included in one or both of the head 102 and the luminaire enclosure 107 of the luminaire 100. In some embodiments, such a processing system may be controlled locally via a user interface included in the light fixture, as discussed further below. In various embodiments, the processing system may be in wired or wireless communication via a data link with a remotely located control console that an operator uses to indicate remotely a desired orientation of the head 102.

In some such embodiments, the control system 103 may be electrically coupled for remote control by a data link (wired or wireless) to a remotely located control console, to receive signals therefrom comprising commands indicating a desired orientation of the head 102 (an orientation command) or other parameter of the luminaire 100, such as intensity, color, focus, beam angle, beam shape, and/or beam pattern. The data link may use DMX512 (Digital Multiplex) protocol or other suitable communication protocol, e.g., Art-Net, ACN (Architecture for Control Networks), and Streaming ACN. In such embodiments, the control system 103 is configured to move the pan and/or tilt mechanisms (or other mechanisms of the luminaire 100) in response to signals received via the data link. In some such embodiments, the control system 103 moves the pan mechanism in response to a control signal received on a first control channel of the data link and moves the tilt mechanism in response to a control signal received on a second control channel of the data link.

The head 102 comprises a lens array 104. In the embodiment shown in FIG. 1, there are six lenses in the lens array 104, however the number, sizes, and arrangement of lenses in the lens array 104 is a design choice to obtain a desired appearance of the light output face of the luminaire 100. Other embodiments of luminaires according to the disclosure may be designed to obtain a different desired appearance of the light output face of the luminaire 100, for example by including more or fewer than six lenses, or including lenses of different shapes that fit together to fill the lens array 104. Each individual lens of the embodiment of the lens array 104 has a shape with a rounded outer perimeter and adjoining edges such that the outer perimeter of the array of output lenses forms a complete (contiguous) circle of lenses. With such a lens arrangement, the light output from each lens in the output lens array combines to produce a single circular beam where each lens in the output lens array is fully illuminated.

The head 102 may further comprise a central light tube 106. The central light tube 106 may be capped with plain glass or a frost or diffusing filter. The central light tube 106 may be positioned in an aperture at the center of the lens array 104.

A luminaire enclosure 107 includes a display panel 108 electrically coupled to the control system 103. The display panel 108 may be a liquid crystal display (LCD), LED panel, organic LED (OLED) panel, or other display panel suitable for mounting in or on an external surface of the luminaire enclosure 107. The display panel 108 is configured to display images and text and may be either a monochrome or a color display panel. The luminaire enclosure 107 further includes a control panel 110 fitted with user controls. In other embodiments, the display panel 108 may be touch sensitive and the user controls may be displayed on the display panel 108. The display panel 108 may be used by the control system 103 as a display device visible to an audience and used to display images, patterns, photographs, videos or other visual content that specifies a pixel value for all pixels of the display panel 108.

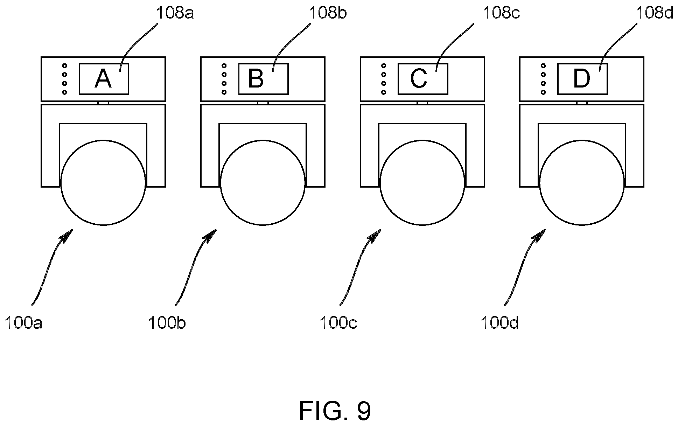

The display panel 108 is shown in FIG. 1 and FIG. 9 as part of a luminaire that is a motorized pan/tilt luminaire. In other embodiments, a display panel according to the disclosure may be part of other types of luminaires: e.g., a motorized tilt-only luminaire or a static luminaire whose man and/or tilt are adjusted manually.

In various embodiments, the control system 103 is configured to receive via the data link discussed above a display command comprising the visual content and, in response, cause the display panel to display the visual content. In some embodiments, the display command includes information specifying a portion of the visual content to display in the display panel. In some embodiments, the visual content is received via the datalink. In other embodiments, the visual content is stored visual content that is stored in non-volatile memory of the control system 103 and the display command comprises an identifier of the stored visual content. Examples of suitable non-volatile memory include Flash Random Access Memory (RAM), Solid-State Drives (SSDs), and battery-backed RAM.

In further embodiments the luminaire 100 may include a video input configured to receive direct input of visual content to be displayed on the display panel 108. Such a video input may be a video signal such as a Red, Green, Blue (RGB) analog signal, High Definition Multimedia Interface (HDMI), Serial Digital Interface (SDI), or Digital Visual Interface (DVI). In other such embodiments, the video input comprises an Ethernet port configured to receive a video signal in a streaming video protocol, such as Hypertext Transfer Protocol (HTTP) Live Streaming (HLS), Real-Time Streaming Protocol (RTSP), or Dynamic Adaptive Streaming over HTTP (DASH). In such embodiments, the Ethernet port may also be the data link via which parameter commands for the luminaire 100 are received.

In still further embodiments, display panel 108 may display a portion of a larger, pixel mapped, image. In some such embodiments, the content of the image may be spilt across the display panels 108 of multiple adjacent luminaires 100. In further embodiments the user may control one or more display parameters of the display panel 108 via a remote-control data link. Examples of such display parameters include brightness, contrast, gamma, image rotation, color hue, color saturation, color intensity, and color temperature.

In all such embodiments, processing control of the display panel 108 may be performed by one or both of the control system 103 and processor(s) of the display panel 108. In some embodiments, the control system 103 may perform the processes needed to respond to a display command and send pixel values for all pixels to the display panel 108. In other embodiments, the control system 103 may forward the display command to the display panel 108 for processing. In still other embodiments, both the control system 103 and the processor(s) of the display panel 108 may cooperatively respond to the display command.

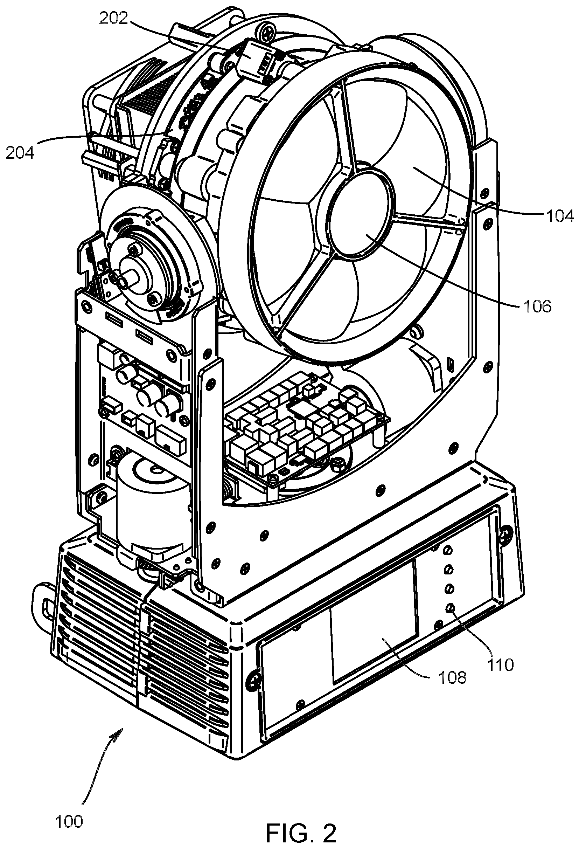

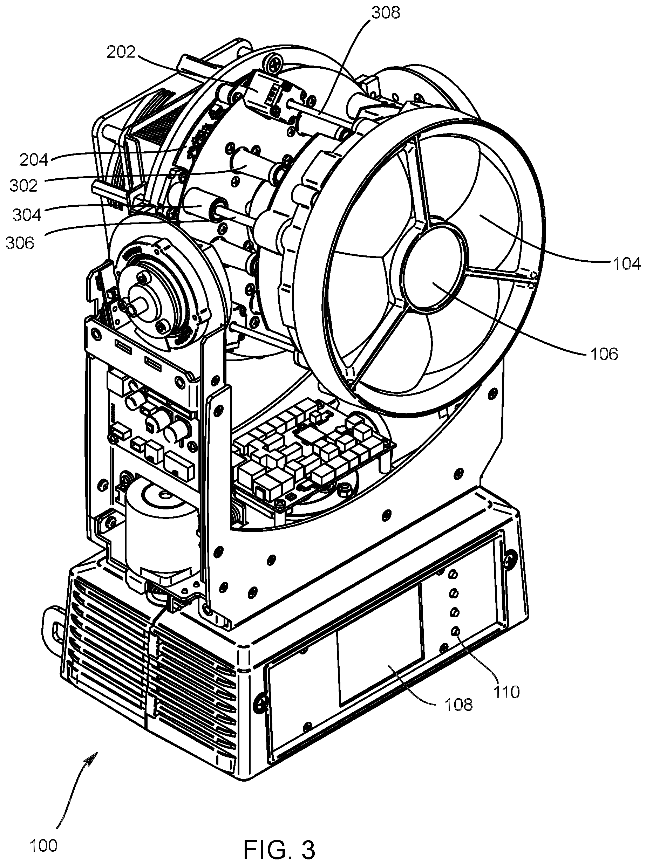

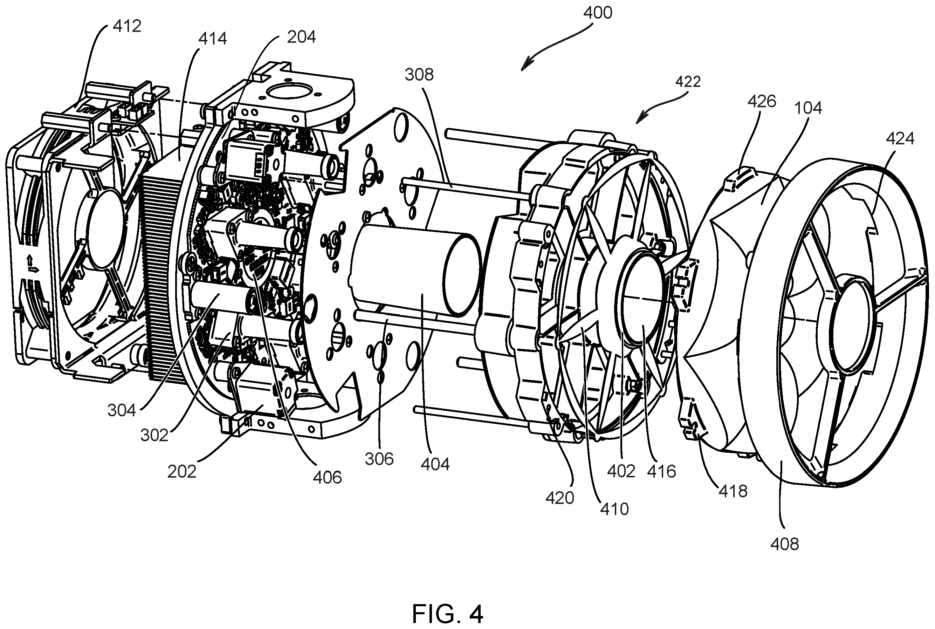

FIG. 2 and FIG. 3 present isometric views of the first luminaire 100 with covers removed and with the optical system in the first configuration and a second configuration, respectively. The luminaire 100 includes an array of LED optical modules 302, wherein the array of the LED optical modules 302 comprises a plurality of the LED optical modules 302. Each LED optical module 302 includes an array of LEDs or a multi-chip LED (not shown in FIGS. 2 or 3) comprising a plurality of LED dies mounted on a circuit board 204. Each LED die may be a different color or an array of colors. Each LED optical module 302 further includes a light pipe or integrating rod configured to homogenize the light from the LED dies and may also include a diffusion (or other) optical element on an exit end of a light pipe of the LED optical module 302. In various embodiments, the circuit board 204 is thermally connected to a heatsink 414 which, in some such embodiments, is cooled by a fan 412 (both shown in FIG. 4).

Each LED optical module 302 is aligned with a single output lens of the lens array 104 and emits a light beam. Each output lens is configured to receive the light beam emitted by its associated LED optical module 302 and to emit a corresponding output light beam from the luminaire 100. Each LED optical module 302 is configured to control a brightness and color of its emitted light beam separately from other LED optical modules 302. The luminaire 100 is configured to control collectively a beam angle of the output light beams emitted by the output lenses of the lens array 104 by moving the lens array 104 toward and away from the LED optical modules 302, as discussed in more detail below.

The lens array 104 may be moved on bearing rods 306 that are received in linear bearings 304 and aligned parallel to an optical axis of the luminaire. The lens array 104 is moved via the operation of motors 202 and motor shafts 308. The motors 202 are electrically coupled to the control system 103, which is configured to move the lens array 104 toward and away from the LED optical modules 302. The lens array 104 is moved relative to the circuit board 204 and thus relative to the LED optical modules 302.

As the motors 202 adjust the distance between the lens array 104 and the LED optical modules 302, the beam angle of the light beams emitted from the lens array 104 also varies. FIG. 2 presents the first configuration, where the lens array 104 is positioned closer to the LED optical modules 302. In this position the emitted beam angle is at a maximum. FIG. 3 presents the second configuration, where the lens array 104 is positioned farther from the LED optical modules 302. In this position the emitted beam angle is at a minimum. Thus, the lens array 104 is configured to control a beam angle of the optical system by moving along the optical axis towards and away from the LED optical modules 302.

FIG. 4 presents an exploded view of an optical system 400 of the first luminaire 100. The luminaire optical system 400 comprises an auxiliary LED array 406. The auxiliary LED array 406 includes an array of LEDs and/or a multi-chip LED with a plurality of LED dies mounted on the circuit board 204. Each LED die may be a different color or array of colors. In some embodiments, the auxiliary LED array 406 comprises a central multi-chip LED surrounded by an array of white LEDs. In some such embodiments, the multi-chip LED in the auxiliary LED array 406 is the same multi-chip LED as used in the LED optical modules 302. In some such embodiments, the array of white LEDs in the auxiliary LED array 406 are configured to be used as a strobe.

The auxiliary LED array 406 emits light into light tubes 402 and 404, which comprise the central light tube 106. The light tubes 402 and 404 may be circular, hexagonal, octagonal, square, or other cross section. The light tubes 402 and 404 may have a reflective coating on their inner surface, which may be specular or non-specular. The light tube 402 is of a larger diameter than light tube 404 and is configured to enable the light tube 404 to slide inside light tube 402 to provide a telescoping light tube assembly. In other embodiments, the light tube 402 has a smaller diameter than light tube 404 and is configured to slide inside light tube 404. In some embodiments, a light input end of the light tube 404 is attached to the circuit board 204 and a light exit end of the light tube 402 is attached to a lens support 422. The lens support 422 physically couples to and supports the lens array 104 and a bezel 408.

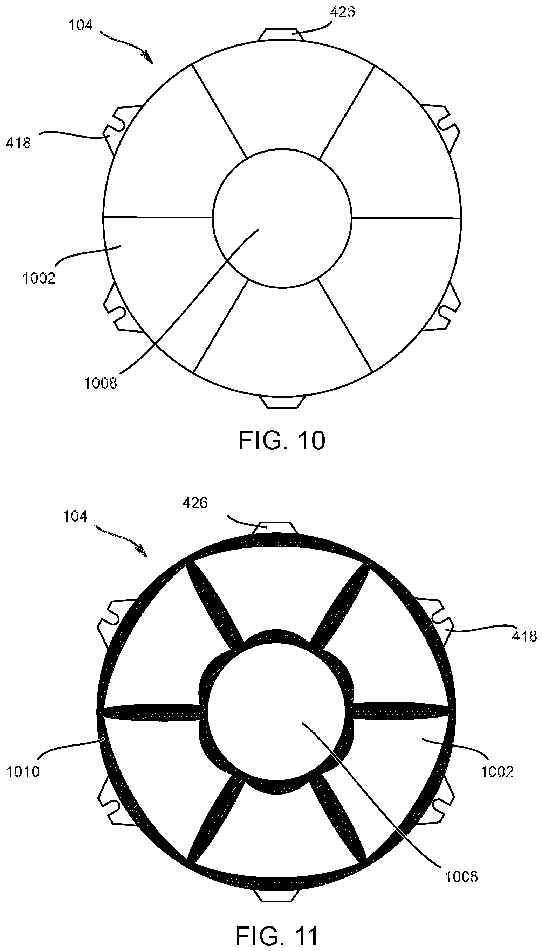

In some embodiments, the optical system 400 includes a lens mask 410, positioned between the lens support 422 and the lens array 104. The lens mask 410 is discussed further with reference to FIG. 11.

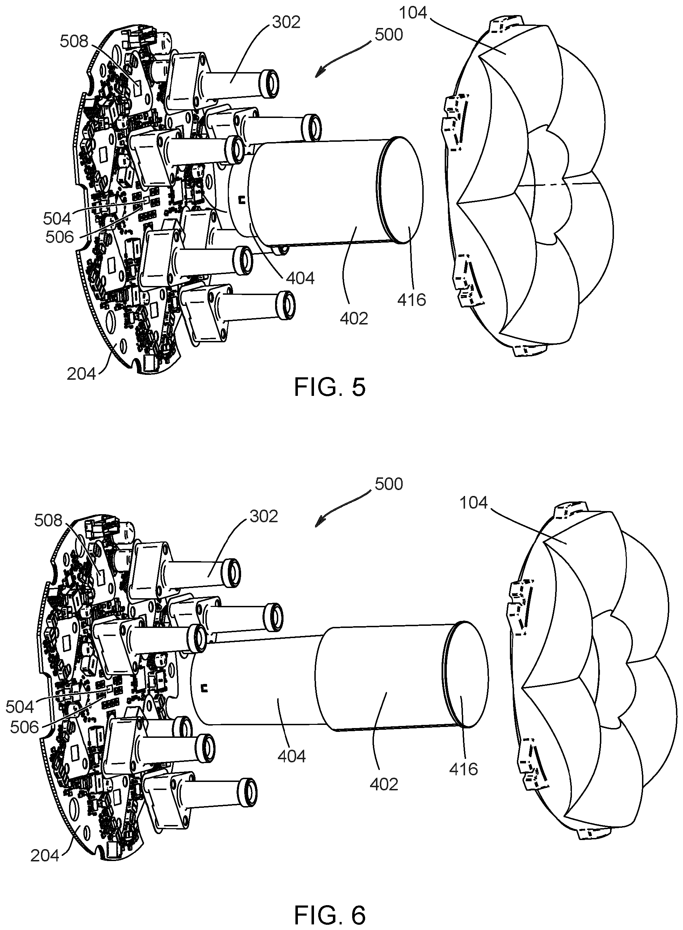

As the lens array 104 is moved towards and away from the LED optical modules 302 to adjust a beam angle of light from LED optical modules 302, the light tube 402 is moved along with the lens array 104, sliding outside the light tube 404. In some embodiments, the light tube 402 and the light tube 404 do not contain lenses and the beam angle of the light emitted from the auxiliary LED array 406 is not affected by the movement of the lens array 104. In some embodiments, the light tube 402 has a plain glass, frost, or diffusing plate or other optical element 416 (shown in FIG. 5) mounted to or otherwise covering its light exit end. In other embodiments, the optical element 416 is an electrically adjustable diffusing filter, a patterned plate, or a filter, such as a star filter.

Some multi-lens arrays include lens mounts and support elements that are in the light transmissive area of the lenses. Such mounts and elements result in corresponding darker areas of the beam emitted through such a multi-lens array. An optical system according to the disclosure solves this problem by positioning lens mounts and support elements of its lens array outside the array's light transmissive area.

The lens array 104 comprises a plurality of lens mounting tabs 418 that are configured to be received by (and thereby physically couple to) corresponding support bosses 420 or other features of the lens support 422. Each lens mounting tab 418 may be secured (or mechanically coupled) to its corresponding support boss 420 by a bolt, quarter-turn fastener, clip, or other suitable fastener. In some embodiments, the fastener secures a plurality (but fewer than all) of the lens mounting tabs 418. When the lens mounting tabs 418 are coupled to the support bosses 420, one or more lens alignment tabs 426 are held against corresponding surfaces of the lens support 422. The lens alignment tabs 426 and the lens mounting tabs 418 (collectively referred to as mounting features) are configured to align the lens array 104 parallel to a front surface of the lens support 422. Recesses 424 in the bezel 408 are configured to receive the lens mounting tabs 418 and the lens alignment tabs 426. The lens mounting tabs 418 and support bosses 420 are positioned outside the light transmissive area of lens array 104. As such, the lens alignment tabs 426, the lens mounting tabs 418, the support bosses 420, and associated fasteners do not obstruct light passing through the lens array 104. Such positioning and physical coupling result in each lens of the lens array 104 appearing to a viewer as completely filled with light (or fully illuminated).

The lens array 104 comprises a plurality of adjacent lenses, each lens configured to receive an individual light beam from one of the LED optical modules 302 and emit a corresponding individual output light beam. In some embodiments, the lens array 104 is configured as a single optical element comprising a plurality of lens areas that form the lenses and includes a plurality of lens mounting tabs 418. In some such embodiments, the lens array 104 is a molded optical element. In other embodiments, the lens array 104 comprises six individual, physically separate optical elements, each with a lens mounting tab 418, where the individual optical elements are lenses mounted to the lens support 422 adjacent to each other, to form the complete lens array 104. As discussed above, the lens array 104 may comprise more or fewer than six lenses or lens areas.

FIG. 5 and FIG. 6 present exploded views of luminaire optical components 500 of the first luminaire 100 in the first and second configurations, respectively. FIG. 5 presents the light tube 404 fully nested inside the light tube 402, when the lens array 104 is moved towards the LED optical modules 302. FIG. 6 presents the light tube 404 extended from the light tube 402, when the lens array 104 is moved away from the LED optical modules 302. (Note: these are exploded diagrams. In some embodiments, the rear end of light tube 404 is attached to the circuit board 204 and the front end of light tube 402 is attached to the lens support 422 that supports the lens array 104.) Also visible in FIG. 5 and FIG. 6 are an LED multi-chip 504 and an LED array 506 which comprise the auxiliary LED array 406. A light source 508 is part of the LED optical module 302 and may comprise an LED, an LED multi-chip, or an LED array.

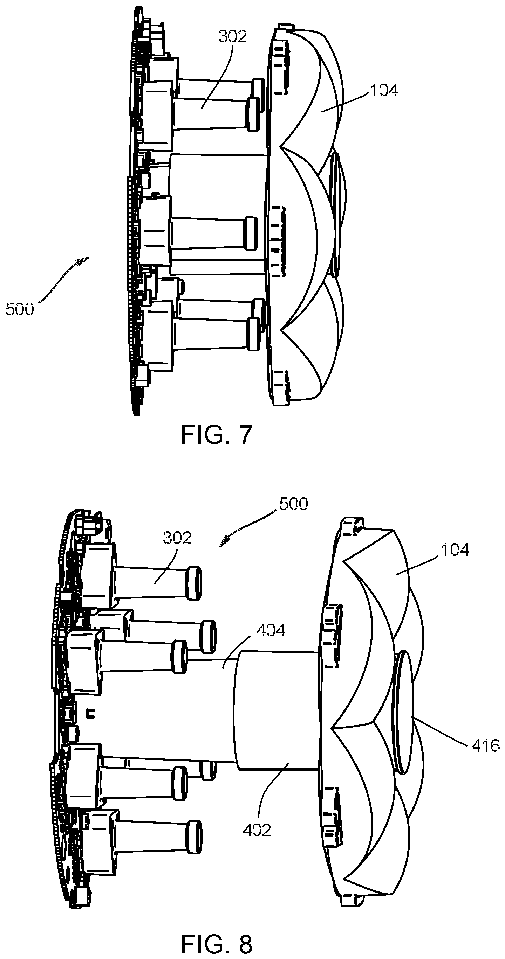

FIG. 7 and FIG. 8 present the luminaire optical components 500 in the first and second configurations, respectively. FIG. 7 presents the light tube 404 fully nested inside the light tube 402, when the lens array 104 is moved towards the LED optical modules 302. FIG. 8 presents the light tube 404 extended from the light tube 402, when the lens array 104 is moved away from the LED optical modules 302. In this embodiment, the rear end of the light tube 404 is attached to the circuit board 204 and the front end of the light tube 402 is attached to the lens support 422 (not shown in FIG. 7 and FIG. 8). The light exit end of the light tube 402 includes the optical element 416.

FIG. 9 presents four luminaires, each comprising a display system of the disclosure. Luminaires 100a, 100b, 100c, and 100d include display panels 108a, 108b, 108c, and 108d, respectively. As previously discussed, the display panels 108a-d may be individually and separately controlled to display images, colors, photographs, or video content. In some embodiments, the display panels 108a-d may be used in a coordinated manner. In one example, the display panels 108a-d may each display a portion of a larger image or may display a pattern (or chase effect) that moves from one to another of the display panels 108a-d. In another example, each of the display panels 108a-d may display a color that is the same as or is otherwise based on a color of a light beam emitted from its associated luminaire 100a-d.

FIG. 10 presents an elevation view of a light output side of the lens array 104 of the optical system 400 of the first luminaire 100. The lens array 104 comprises a plurality of individual, adjacent lenses 1002 having rounded inner perimeters, the rounded inner perimeters configured to form a substantially unbroken central aperture 1008 in the lens array 104. In other embodiments, the inner perimeters of the adjacent lenses 1002 may be flat and configured to form a substantially unbroken polygonal central aperture 1008 in the lens array 104. In some embodiments the lens array 104 is a single molded component. For the purposes of this disclosure, the term "substantially unbroken" means broken by gaps between adjacent lenses 1002 no larger than those resulting from manufacturing tolerances of the sides of the adjacent lenses 1002.

As discussed above, the lens array 104 comprises the lens mounting tabs 418 and the lens alignment tabs 426. The lens mounting tabs 418 and the lens alignment tabs 426 are positioned outside of the portions of the lens array 104 that receive light emitted by the LED optical modules 302 (the light transmissive area) and configured so that the lens mounting tabs 418, the features of the lens support 422 to which they couple, and any associated fasteners do not obstruct light emitted by the LED optical modules 302 and entering the lens array 104. Such mounting ensures that each lens 1002 in the lens array 104 appears to a viewer of the lens array 104 as fully illuminated.

FIG. 11 presents an elevation view of a light input side of the lens array 104 of FIG. 10. In some embodiments, the lens array 104 is fitted with a lens mask 1010. The lens mask 1010 provides a light blocking layer and may comprise a paint, a dye, a foil, or a film applied to the light input side of the lens array 104. The lens mask 1010 is configured to cover one or more edges of the lenses 1002. The covered edges may be those where two lenses 1002 abut one another, edges in the outer perimeter of the lens array 104, and/or edges in the central aperture 1008 of the lens array 104. The lens mask 1010 is configured to reduce spilled light from the LED optical module 302 of an adjacent lens 1002, i.e., light that falls outside of the edges of the adjacent lens 1002. The lens mask 1010 is also configured to reduce reflected light from an adjacent lens 1002 or from another internal component of the luminaire 100, from the outer perimeter of the lens array 104, and/or into the central aperture 1008. The lens mask 1010 may have a shape as shown in FIG. 11 or, in other embodiments, a different shape that reduces one or both of spilled and reflected light between the lenses 1002. As discussed above, in some embodiments, a lens mask 410 may additionally or alternatively be a separate optical element located between the lens array 104 and the lens support 422, as shown in FIG. 4.

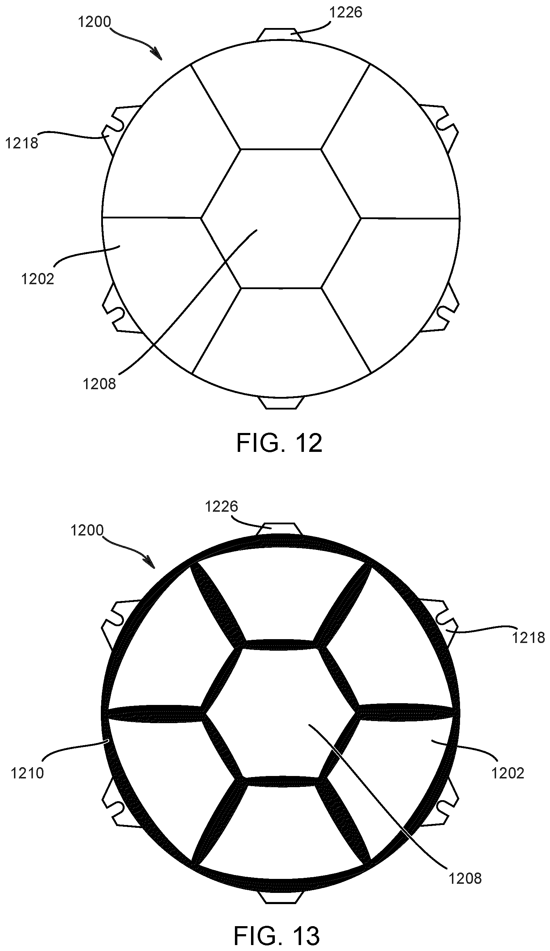

FIG. 12 presents an elevation view of a light output side of a second lens array 1200 according to the disclosure. The lens array 1200 comprises a plurality of individual, adjacent lenses 1202 surrounding a central lens 1208. The central lens 1208 is configured to abut an inner perimeter of each lens of the plurality of adjacent lenses 1202. In some embodiments the lens array 1200 is a single molded component. The lens array 1200 comprises lens mounting tabs 1218 and alignment tabs 1226. The lens mounting tabs 1218 and the alignment tabs 1226 are positioned outside the light transmissive area of lens array 1200 and configured so that they and any associated fasteners to which they couple do not obstruct light emitted by the LED optical modules 302 and entering the lens array 1200. Such mounting ensures that each lens 1202 and 1208 in lens array 1200 appears to a viewer of the lens array 1200 as fully illuminated. In some embodiments, the central lens 1208 comprises the optical element 416 (discussed with reference to FIG. 4 and shown in FIG. 5) covering the light exit end of the light tube 402.

FIG. 13 presents an elevation view of a light input side of the second lens array 1200. In some embodiments, the lens array 1200 is fitted with a lens mask 1210. The lens mask 1210 provides a light blocking layer and may comprise a paint, a dye, a foil, or a film applied to the light input side of the second lens array 1200. As described with reference to FIG. 11, the lens mask 1210 is configured to cover one or more edges of the lenses 1202, to reduce spilled light and/or reflected light for the lenses 1202 and/or the central lens 1208, and may additionally or alternatively be a separate element located between the lens array 1200 and the lens support 422.

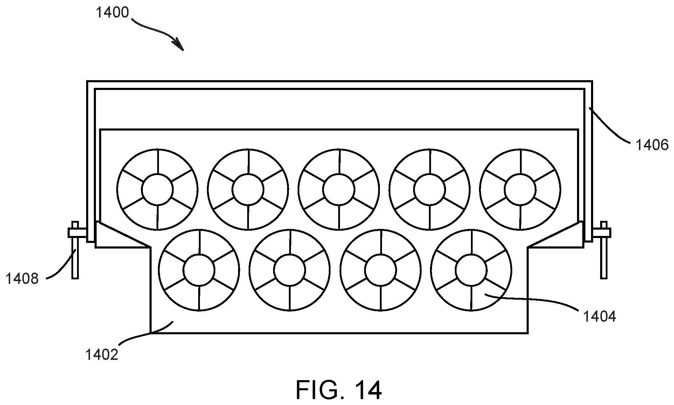

FIG. 14 presents an elevation view of a second luminaire 1400 according to the disclosure. The second luminaire 1400 comprises a housing 1402 rotatably coupled to and supported by a yoke 1406. The housing 1402 is configured to rotate relative to the yoke 1406 in a tilt direction and to be held in a desired position relative to the yoke 1406 by tilt clamps 1408. The second luminaire 1400 comprises a plurality of optical system modules 1404 mounted in the housing 1402. At least one of the optical system modules 1404 comprises the optical system 400 discussed above. In other embodiments, one or more of the optical system modules 1404 may comprise another optical system according to the disclosure or an optical system not according to the disclosure.

In some embodiments, each optical system module 1404 of the plurality of optical system modules 1404 is configured for individual control of a beam angle of a light beam emitted by the optical system module 1404. In other embodiments, some or all of the optical system modules 1404 are configured for collective control of all the emitted beam angles together. Similarly, in some embodiments, each LED optical module 302 of each optical system module 1404 is configured for individual control of brightness and/or color of a light beam emitted by the LED optical module 302. In other embodiments, the LED optical modules 302 of each optical system module 1404 are configured for collective control of brightness and/or color of the light beams emitted by the LED optical modules 302. In still other embodiments, the optical system modules 1404 are configured for a combination of collective and individual control of emitted beam angles and light beam brightness and/or color.

The number and arrangement of the optical system modules 1404 in the second luminaire 1400 shown in FIG. 14 is one example of how optical system modules may be arranged. In other embodiments, any number of the optical system modules 1404 may be arranged in any layout or shape within a luminaire according to the disclosure.

While only some embodiments of the disclosure have been described herein, those skilled in the art, having benefit of this disclosure, will appreciate that other embodiments may be devised which do not depart from the scope of the disclosure herein. While the disclosure has been described in detail, it should be understood that various changes, substitutions, and alterations can be made hereto without departing from the spirit and scope of the disclosure.

## Claims

1. A luminaire (100) comprising:
an enclosure (107), comprising a display panel (108) mounted in an external surface of the enclosure;
a head (102) mechanically coupled to the enclosure, the head configured for rotation relative to the enclosure and to emit a light beam; and
a control system (103) located in one or both of the head and the enclosure, the control system configured to:
receive a display command via a data link and, in response, cause the display panel to display visual content specified in the display command, the visual content comprising pixel values for all pixels of the display panel.

2. The luminaire of claim 1, wherein the control system is further configured to receive via the data link an orientation command and, in response, rotate the head relative to the enclosure to an orientation specified in the orientation command.

3. The luminaire of claim 1, wherein the visual content is stored visual content stored in non-volatile memory of the control system and the display command comprises an identifier of the stored visual content.

4. The luminaire of claim 1, wherein the display command comprises the visual content.

5. The luminaire of claim 1, wherein the visual content comprises a single pixel value for all pixels of the display panel.

6. The luminaire of claim 5, wherein the single pixel value comprises a color that is a same color as a light beam emitted from the luminaire or is based on the color of the light beam emitted from the luminaire.

7. The luminaire of claim 1, further comprising a video input configured to receive direct input of the visual content in a video signal.

8. The luminaire of claim 1, wherein the display command comprises the visual content and information specifying a portion of the visual content to display in the display panel.

9. The luminaire of claim 1, wherein the display command comprises one or more display parameters of the display panel, the one or more display parameters including one or more of brightness, contrast, gamma, image rotation, color hue, color saturation, color intensity, and color temperature.
